# EUROPEAN PATENT APPLICATION

(11) **EP 4 807 473 A1**
(43) Date of publication of application: **16.09.2026**
(21) Application number: 24944607.1
(22) Date of filing: 28.06.2024
(51) Int. Cl.: G05B 19/18, G05B 19/4065

(54) **MACHINING DIAGNOSIS DEVICE, LEARNING DEVICE, INFERENCE DEVICE, MACHINING DIAGNOSIS METHOD, MACHINING DIAGNOSIS PROGRAM, AND MACHINE TOOL SYSTEM**

(71) Applicant: Mitsubishi Electric Corporation, Tokyo 100-8310 (JP); Yamazaki Mazak Corporation, Niwa-gun, Aichi 480-0197 (JP)
(72) Inventor: ISHIDA, Tetsushi, Tokyo 100-8310 (JP); TAKASHIMA, Norihisa, Tokyo 100-8310 (JP); AIKAWA, Shunsuke, Tokyo 100-8310 (JP); SHINTOKU, Kosuke, Niwa-gun, Aichi 480-0197 (JP); GOTO, Akihiro, Niwa-gun, Aichi 480-0197 (JP); ISEKI, Akira, Niwa-gun, Aichi 480-0197 (JP)
(74) Representative: Diehl & Partner
(86) International application number: PCT/JP2024/023583
(87) International publication number: WO 2026/004116

(57) **Abstract**

A machining diagnosis device (1) includes: a data acquisition unit (11) that acquires a physical quantity related to an operation state of a machine (90) that machines a workpiece, and a machining condition at a time when the physical quantity is obtained; a feature calculation unit (12) that calculates, for each machining condition based on the physical quantity and the machining condition, a statistical feature of a physical quantity obtained during machining under the same machining condition; and an inference unit (16) that performs machining diagnosis based on the statistical feature for each machining condition.

## Description

### Field

The present disclosure relates to a machining diagnosis device, a learning device, an inference device, a machining diagnosis method, a machining diagnosis program, and a machine tool system that estimate a result of machining and the like performed by a numerical control (NC) machine tool.

### Background

In a numerical control machine tool, a good machining result cannot be obtained when the tool to be used is worn due to the execution of the machining. Therefore, a technique of determining whether a predetermined machining result can be obtained, a technique of determining necessity of tool replacement, and the like have been proposed so far.

For example, Patent Literature 1 discloses a technique of collecting drive current, vibration, temperature, and the like of a spindle motor as state data indicating an operation state of a numerical control machine tool, and predicting machining quality and tool replacement time based on the collected state data. In the technique described in Patent Literature 1, in a case where machining is performed by repeatedly creating a machined product having the same shape, a regression equation as a prediction model used for prediction of machining quality is generated on the assumption that, for example, repetitive state data can be acquired under the same machining conditions.

### Citation List

### Patent Literature

Patent Literature 1: Japanese Patent Application Laid-open No. 2020-123409

### Summary of Invention

### Problem to be solved by the Invention

However, in the technique described in Patent Literature 1, machining conditions such as a rotation speed of a spindle, a feed speed of a tool during machining, and a cutting amount with respect to a workpiece are not considered. For this reason, in machining for high-mix low-volume production in which the same machining is not repeatedly performed, such as machining for producing molds and machining of custom-made products, it is difficult to repeatedly collect state data under the same machining conditions, and thus there is a problem that prediction of machining quality and determination of tool replacement time cannot be performed.

In machining for obtaining one machined product, machining is usually performed on a workpiece while changing machining conditions such as a cutting amount and a feed speed of a tool with respect to the workpiece. In the case of repeating machining for obtaining a machined product having the same shape, the machining conditions are changed at the same timing in each machining to be repeatedly performed, and the state data during machining is similarly changed at the same timing every time. Therefore, even if the machining conditions are unknown, it is possible to predict the machining quality and determine the tool replacement time from the state data obtained in each machining that is repeatedly executed. On the other hand, in machining for high-mix low-volume production in which the timing at which machining conditions are changed differs between machinings, it is difficult to predict machining quality and determine tool replacement time based only on the state data.

The present disclosure has been made in view of the above, and an object thereof is to provide a machining diagnosis device capable of predicting machining quality and determining tool replacement time even when machining for high-mix low-volume production is performed.

### Means to Solve the Problem

In order to solve the above-described problems and achieve the object, a machining diagnosis device according to the present disclosure includes: a data acquisition unit to acquire a physical quantity related to an operation state of a machine that machines a workpiece, and a machining condition at a time when the physical quantity is obtained; a feature calculation unit to calculate, for each machining condition based on the physical quantity and the machining condition, a statistical feature of a physical quantity obtained during machining under the same machining condition; and an estimation unit to perform machining diagnosis based on the statistical feature for each machining condition.

### Effects of the Invention

The machining diagnosis device according to the present disclosure can achieve the effect of predicting machining quality and determining tool replacement time even when machining for high-mix low-volume production is performed.

### Brief Description of Drawings

FIG. 1 is a diagram illustrating an example of a machine tool system implemented by applying a machining diagnosis device according to an embodiment.
FIG. 2 is a diagram illustrating an example of machining performed by the numerical control machine tool of the machine tool system according to the embodiment.
FIG. 3 is a diagram illustrating an example of machining parameters necessary for creating a machining program.
FIG. 4 is a diagram illustrating an exemplary configuration of a database that is referred to when the machining program generation unit of the numerical control device generates a machining program.
FIG. 5 is a diagram illustrating the hardware configuration of the machining diagnosis device according to the embodiment.
FIG. 6 is a diagram illustrating an exemplary functional block configuration of the machining diagnosis device according to the embodiment.
FIG. 7 is a flowchart illustrating an example of an operation in which the machining diagnosis device generates a learned model for diagnosing the numerical control machine tool.
FIG. 8 is a flowchart illustrating an example of an operation in which the learning target identification unit of the machining diagnosis device according to the embodiment creates learning data.
FIG. 9 is a diagram for explaining an approach section and a target dimension matching section.
FIG. 10 is a flowchart illustrating an example of an operation in which the machining diagnosis device according to the embodiment diagnoses a machining result by the numerical control machine tool using the learned model.
FIG. 11 is a flowchart illustrating an example of diagnosis operation by the machining diagnosis device according to the embodiment.

### Description of Embodiments

Hereinafter, a machining diagnosis device, a learning device, an inference device, a machining diagnosis method, a machining diagnosis program, and a machine tool system according to an embodiment of the present disclosure will be described in detail with reference to the drawings.

### Embodiment.

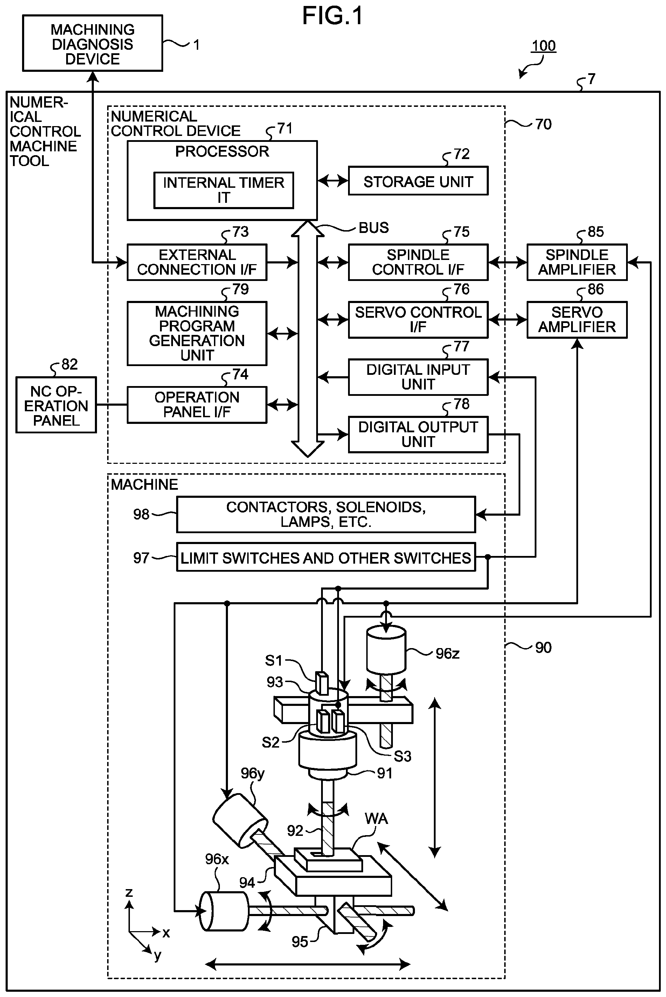

FIG. 1 is a diagram illustrating an example of a machine tool system 100 implemented by applying a machining diagnosis device 1 according to an embodiment. FIG. 1 also illustrates the configuration of a numerical control machine tool 7 to be diagnosed by the machining diagnosis device 1.

First, the configuration of the numerical control machine tool 7 will be described. The numerical control machine tool 7 includes a numerical control device 70 that processes numerical control data (NC data) and outputs a control signal, and a machine 90 that applies machining to a workpiece WA in accordance with the control signal from the numerical control device 70.

The machine 90 includes a spindle 91, a tool 92 attached to the spindle 91, a spindle motor 93 that rotationally drives the spindle 91, a table 94 that fixes a workpiece WA, a movement mechanism 95 that moves the table 94, two servomotors 96x and 96y that align the movement mechanism 95 in the x-axis and y-axis directions, and a servomotor 96z that aligns the spindle motor 93 in the z-axis direction. A drive current is supplied from a spindle amplifier 85 to the spindle motor 93, and a drive current is supplied from a servo amplifier 86 to the servomotors 96x, 96y, and 96z. The servomotors 96x, 96y, and 96z can independently control the position of the tool 92 with respect to the workpiece WA in the x-axis, y-axis, and z-axis directions, respectively.

A current sensor S1, a vibration sensor S2, and a temperature sensor S3 are disposed in the spindle motor 93. In addition, the machine 90 includes equipment 98 such as a contactor, a solenoid, and a lamp, and a limit switch, a sensor, and other switches 97 each of which detects a state of each unit in the machine 90 and output a detection signal.

The numerical control device 70 includes a processor 71 that processes information, a storage unit 72 that stores data, an external connection interface (hereinafter referred to as I/F) 73 connected to the machining diagnosis device 1, an operation panel I/F 74 connected to a NC operation panel 82, a spindle control I/F 75 connected to the spindle amplifier 85, and a servo control I/F 76 connected to the servo amplifier 86.

In accordance with the machining program and the numerical information stored in the storage unit 72, the processor 71 supplies a drive signal to the spindle amplifier 85 via the spindle control I/F 75 to drive the spindle motor 93, and supplies a drive signal to the servo amplifier 86 via the servo control I/F 76 to operate the servomotors 96x, 96y, and 96z. As a result, the spindle 91 is rotationally driven, the tool 92 is positioned, and the workpiece WA is cut. The machining program stored in the storage unit 72 is also referred to as a numerical control program.

In addition, a digital input unit 77 receives data from the current sensor S1, the vibration sensor S2, the temperature sensor S3, the limit switch, the sensor, and other switches 97, and supplies the data to the processor 71. The processor 71 stores these data in the storage unit 72. In addition, the processor 71 transmits data from the current sensor S1, the vibration sensor S2, and the temperature sensor S3 to the machining diagnosis device 1 via the external connection I/F 73.

The external connection I/F 73 performs data communication with an external device. In particular, in the present embodiment, under the control of the processor 71, the external connection I/F 73 adds time data and type data to the data output from the current sensor S1, the vibration sensor S2, and the temperature sensor S3, and transmits the data to the machining diagnosis device 1.

The operation panel I/F 74 is connected to the NC operation panel 82 including a display unit, a key operation unit, and the like (not illustrated), transmits display data to the NC operation panel 82, receives a key operation signal from the NC operation panel 82, and notifies the processor 71.

In addition, the numerical control device 70 includes the digital input unit 77 that receives a digital signal from the machine 90, a digital output unit 78 that transmits a digital signal to the machine 90, a machining program generation unit 79 that generates a machining program stored in the storage unit 72, and an internal timer IT built in the processor 71.

Here, the machining program generation unit 79 will be described. The machining program generation unit 79 automatically generates a machining program on the basis of various types of information indicating the machining content, such as a target shape that is the final shape of the workpiece WA obtained when machining has been normally performed on the workpiece WA, a pre-machining shape that is the shape of the workpiece WA before machining is performed, a workpiece material that is the material of the workpiece WA, a tool to be used in machining the workpiece WA, a machining pattern, a circumferential speed, a feed speed, a radial cutting amount, and an axial cutting amount.

The machining program generation unit 79 acquires the target shape, the pre-machining shape, the workpiece material, the tool to be used, and the machining pattern from the outside of the numerical control machine tool 7 (for example, from an operator or the like) among the various types of information necessary for generating the machining program. The machining program generation unit 79 acquires the target shape, the pre-machining shape, the workpiece material, the tool to be used, and the machining pattern via the NC operation panel 82 and the operation panel I/F74, for example.

Among the information acquired by the machining program generation unit 79 from the outside of the numerical control machine tool 7, the tool to be used and the machining pattern are individually set for each of a plurality of machining sections forming a path (hereinafter referred to as a tool path) along which the tool moves from the start of machining to obtain the target shape to the end of machining. The designation of machining sections and the setting of the tool to be used and the machining pattern in each machining section are performed by, for example, an operator.

Among the various types of information necessary for generating the machining program, settable values of the circumferential speed, the feed speed, the radial cutting amount, and the axial cutting amount are determined according to the tool to be used and the machining pattern, and in a case where an inappropriate value is set, normal machining cannot be performed. For this reason, the circumferential speed, the feed speed, the radial cutting amount, and the axial cutting amount are determined in advance for a combination of each of a plurality of types of tools that can be used in machining and each of a plurality of machining patterns that can be designated, and are stored in a database. The database of the circumferential speed, the feed speed, the radial cutting amount, and the axial cutting amount is constructed in the storage unit 72, for example. The circumferential speed, the feed speed, the radial cutting amount, and the axial cutting amount are determined by the manufacturer of each tool selectable as a tool to be used, the manufacturer of the numerical control machine tool 7, or the like.

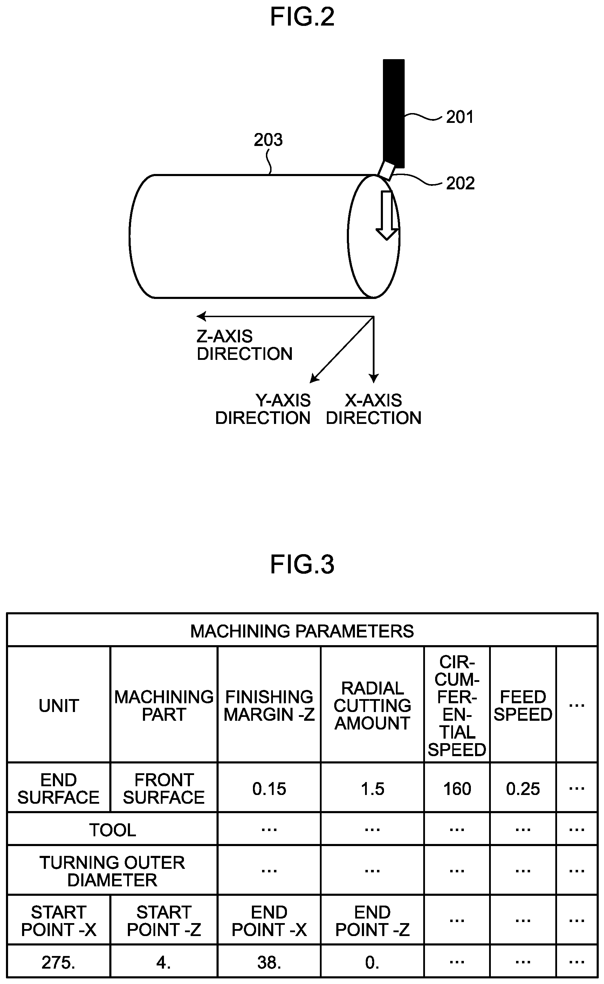

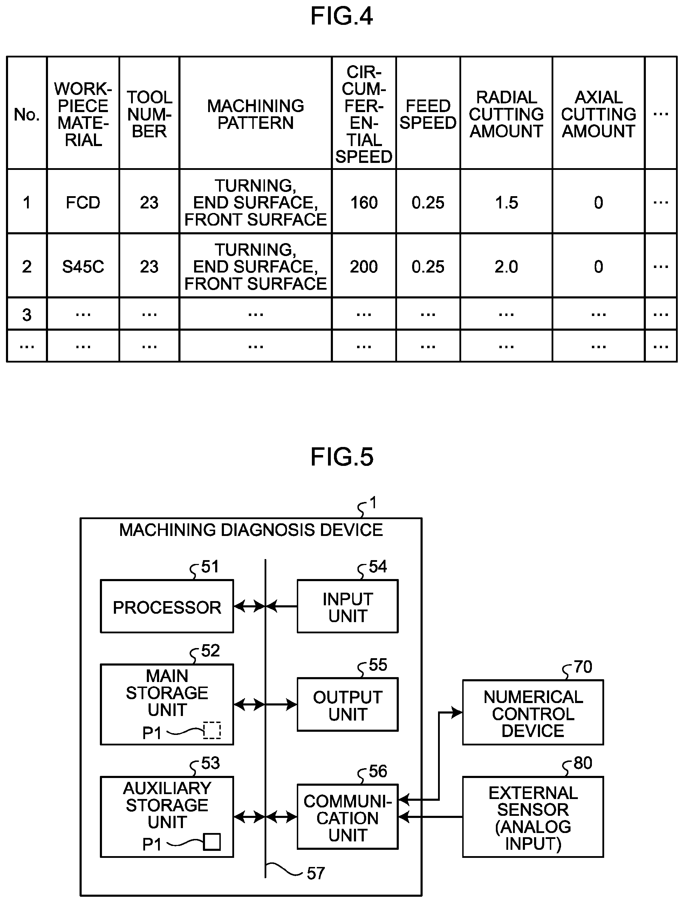

A specific example in which the machining program generation unit 79 generates a machining program will be described. For example, when creating a machining program for turning and machining the workpiece 203 by a tool 201 with a blade 202 as illustrated in FIG. 2, the machining program generation unit 79 generates the machining program on the basis of the machining parameters illustrated in FIG. 3. FIG. 2 is a diagram illustrating an example of machining performed by the numerical control machine tool 7 of the machine tool system 100 according to the embodiment, and FIG. 3 is a diagram illustrating an example of machining parameters necessary for creating a machining program. Among the machining parameters illustrated in FIG. 3, the machining program generation unit 79 acquires "unit", "machining part", "finishing margin -Z", "tool", "start point -X", "start point -Z", "end point -X", and "end point -Z" from the outside via the NC operation panel 82 and the operation panel I/F 74. The machining program generation unit 79 searches the database in which the "radial cutting amount", the "circumferential speed", and the "feed speed" are registered for the "radial cutting amount", the "circumferential speed", and the "feed speed" among the machining parameters illustrated in FIG. 3 by using the "tool", "unit", and "machining part" acquired from the outside as keys. An exemplary configuration of a database in which the "radial cutting amount", the "circumferential speed", and the "feed speed" are registered is illustrated in FIG. 4. FIG. 4 is a diagram illustrating an exemplary configuration of a database that is referred to when the machining program generation unit 79 of the numerical control device 70 generates a machining program. In the database illustrated in FIG. 4, "workpiece material", "tool number", "machining pattern", "circumferential speed", "feed speed", "radial cutting amount", "axial cutting amount", and the like are registered.

In the turning machining illustrated in FIG. 2, the blade 202 of the tool 201 is brought into contact with the end surface of the workpiece 203 being rotated, and the tool 201 is moved in the X-axis direction from this state, so that the workpiece 203 is cut in the Z-axis direction by the cutting amount according to the "radial cutting amount". When the cutting amount required for obtaining the target shape is larger than the cutting amount per cut, the positions of the tool 201 and the blade 202 in the Z-axis direction are changed and similar cutting is repeated. For example, when the machining parameters in the case of performing the turning machining illustrated in FIG. 2 are as illustrated in FIG. 3, the "start point -Z" is "4", the "end point -Z" is "0", and the "finishing margin -Z" is "0.15". Therefore, the cutting amount required in the Z-axis direction is a value (=3.85) obtained by subtracting the finishing margin (=0.15) from the movement amount (=4) of the tool 201 and the blade 202 in the Z-axis direction. The cutting amount in the Z-axis direction per cut is indicated by the "radial cutting amount" of the machining parameter and is 1.5 in FIG. 3. Since the cutting amount (=1.5) in the Z-axis direction per cut is smaller than the cutting amount (=3.85) required in the Z-axis direction, cutting needs to be repeated a plurality of times. Specifically, cutting needs to be repeated three times. In addition, the difference (=0.85) between the total cutting amount (=3) in the Z-axis direction at the time when cutting with a cutting amount of 1.5 is performed twice and the cutting amount (=3.85) required in the Z-axis direction is the cutting amount in the third cutting. The machining program generation unit 79 creates a machining program for performing such machining on the basis of the machining parameters illustrated in FIG. 3. In the present embodiment, a section in which cutting is performed in one machining when the same machining is repeatedly executed for one section may be referred to as a path. For example, in a case where cutting is executed three times for one section to machine the target shape, it is regarded as three paths.

The machining program generation unit 79 also acquires information (machining parameters) indicating the machining content for a machining program of another machining section necessary for machining the workpiece to the target shape, and creates the machining program by a similar method.

The machining program stored in the storage unit 72 is not limited to the machining program automatically generated by the machining program generation unit 79. The storage unit 72 may store a machining program manually created by an operator or the like, and the numerical control machine tool 7 may machine the workpiece WA according to the machining program.

In a case where the machining program stored in the storage unit 72 is manually created, the creator of the program refers to conditions of cutting, circumferential speed, feeding, and the like described in a catalog and the like as cutting recommendation values by a tool manufacturer, and sets the circumferential speed, the feed speed, the radial cutting amount, the axial cutting amount, and the like to values considered to be appropriate in consideration of the material of the workpiece (workpiece material), the tool to be used, the machining pattern, and the like. However, in order to set the circumferential speed, the feed speed, the radial cutting amount, the axial cutting amount, and the like to appropriate values, a lot of knowledge and experience are required, and it is difficult for an inexperienced creator to create a program. In a case where the setting of the circumferential speed, the feed speed, the radial cutting amount, the axial cutting amount, and the like is not appropriate, there is a high possibility that a defect such as failure in achieving desired machining quality, failure of the machine, breakage of the tool, or the like occurs. In order to prevent the occurrence of these defects, it is necessary to adjust the program by repeatedly performing trial machining and the like, which takes time. On the other hand, the machining program generation unit 79 automatically sets the circumferential speed, the feed speed, the radial cutting amount, the axial cutting amount, and the like using a database in which the circumferential speed, the feed speed, the radial cutting amount, the axial cutting amount, and the like are registered in advance for each combination of the workpiece material, the tool, and the machining pattern. Therefore, as described above, just by setting the workpiece material, the tool to be used, the machining pattern, and the target shape, the creator can automatically generate a program for repeatedly performing machining until the target shape is reached, according to the circumferential speed, the feed speed, the radial cutting amount, the axial cutting amount, and the like searched from the setting, and can efficiently create the machining program in a short time without requiring experience and without requiring a programming technique.

Next, the machining diagnosis device 1 will be described. The machining diagnosis device 1 is, for example, a personal computer (PC), an industrial personal computer (IPC), a programmable logic controller (PLC), or another factory automation (FA) device. In addition, the numerical control device 70 may function as a part or all of the machining diagnosis device 1. FIG. 5 is a diagram illustrating the hardware configuration of the machining diagnosis device 1 according to the embodiment. As illustrated in FIG. 5, the machining diagnosis device 1 includes, as a hardware configuration thereof, a processor 51, a main storage unit 52, an auxiliary storage unit 53, an input unit 54, an output unit 55, and a communication unit 56. The main storage unit 52, the auxiliary storage unit 53, the input unit 54, the output unit 55, and the communication unit 56 are all connected to the processor 51 via an internal bus 57.

The processor 51 includes a central processing unit (CPU), a micro processing unit (MPU), a graphics processing unit (GPU) for computation, or a floating point unit (FPU), which are an integrated circuit. The processor 51 implements various functions of the machining diagnosis device 1 by executing a program P1 stored in the auxiliary storage unit 53, and executes processing to be described later.

The main storage unit 52 includes a random access memory (RAM). The main storage unit 52 is loaded with the program P1 from the auxiliary storage unit 53. Then, the main storage unit 52 is used as a work area of the processor 51.

The auxiliary storage unit 53 includes a nonvolatile memory represented by an electrically erasable programmable read-only memory (EEPROM) (registered trademark). The auxiliary storage unit 53 stores various data used for processing of the processor 51 in addition to the program P1. The auxiliary storage unit 53 supplies data used by the processor 51 to the processor 51 according to an instruction of the processor 51, and stores the data supplied from the processor 51.

The input unit 54 includes an input device represented by an input key, a button, a switch, a keyboard, a pointing device, and a digital input (DI) contact (photocoupler input). The input unit 54 acquires information input by the user of the machining diagnosis device 1 and other information provided from the outside, and notifies the processor 51 of the acquired information.

The output unit 55 includes an output device represented by a light emitting diode (LED), a liquid crystal display (LCD), a digital output (DO) contact (photocoupler output), and a speaker. The output unit 55 presents various types of information to the user or outputs various types of information to the outside according to an instruction of the processor 51.

The communication unit 56 includes a network interface circuit for communicating with external devices and an analog signal circuit. The external devices are, for example, the numerical control device 70 described above and an external sensor 80. The external sensor 80 is a sensor provided outside the numerical control machine tool 7, and corresponds to a temperature sensor, a vibration sensor, or the like. The communication unit 56 receives a signal from the outside and outputs information indicated by the signal to the processor 51. Furthermore, the communication unit 56 transmits a signal indicating the information output from the processor 51 to an external device or outputs an analog signal.

With the cooperation of the above-described hardware configuration, the machining diagnosis device 1 learns a model for diagnosing the numerical control machine tool 7 using data collected from the numerical control machine tool 7. When learning of the model is completed, the machining diagnosis device 1 diagnoses machining diagnosis by the machine 90 included in the numerical control machine tool 7, that is, a result of machining performed by the machine 90, based on the learned model and data collected when the numerical control machine tool 7 is machining the workpiece WA. Details of the machining diagnosis will be described later.

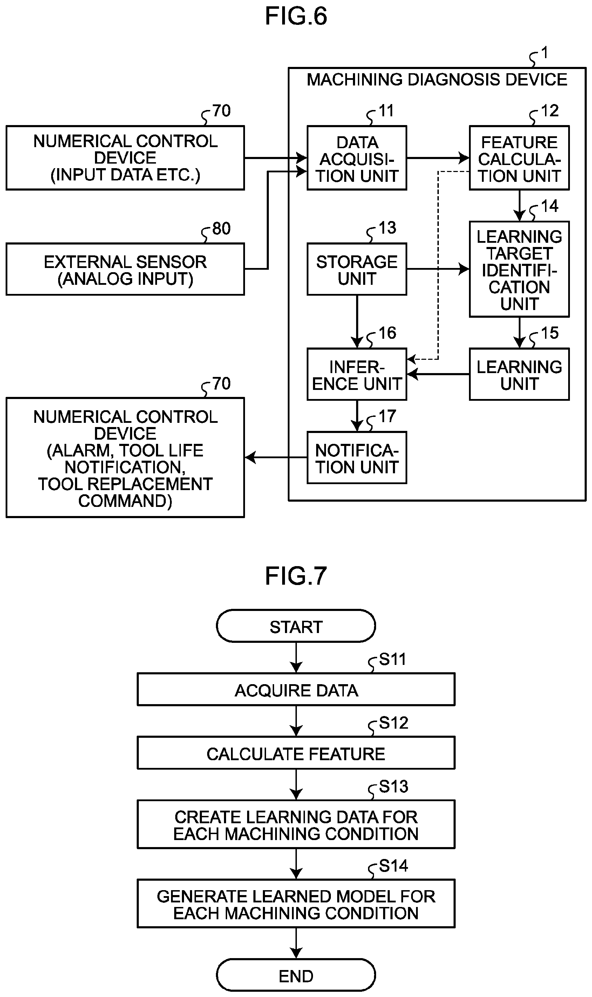

FIG. 6 is a diagram illustrating an exemplary functional block configuration of the machining diagnosis device 1 according to the embodiment. The machining diagnosis device 1 includes a data acquisition unit 11, a feature calculation unit 12, a storage unit 13, a learning target identification unit 14, a learning unit 15, an inference unit 16, and a notification unit 17.

The data acquisition unit 11 and the notification unit 17 are implemented by the communication unit 56 illustrated in FIG. 5. In addition, the storage unit 13 is implemented by the main storage unit 52 and the auxiliary storage unit 53 illustrated in FIG. 5. The feature calculation unit 12, the learning target identification unit 14, the learning unit 15, and the inference unit 16 are implemented by the processor 51, the main storage unit 52, and the auxiliary storage unit 53 illustrated in FIG. 5. That is, the feature calculation unit 12, the learning target identification unit 14, the learning unit 15, and the inference unit 16 are implemented by the processor 51 executing the program P1 for operating as these units. Note that the program P1 for operating as the feature calculation unit 12, the learning target identification unit 14, the learning unit 15, and the inference unit 16 is assumed to be stored in advance in the auxiliary storage unit 53, but is not limited thereto. The program P1 may be written in a recording medium such as a compact disc (CD)-ROM or a digital versatile disc (DVD)-ROM for supply to the user of the machining diagnosis device 1 so that the user installs the program P1 in the auxiliary storage unit 53. The program P1 may be downloaded from a server via a network by the communication unit 56.

Each unit of the machining diagnosis device 1 illustrated in FIG. 6 will be described.

The data acquisition unit 11 acquires, from the numerical control device 70, physical quantities and the like related to the machining operation of the machine 90 collected during machining of the workpiece WA by the machine 90, and also acquires analog data from the external sensor 80. The data acquisition unit 11 acquires, from, for example, the current sensor S1, the vibration sensor S2, and the temperature sensor S3 disposed in the spindle motor 93 of the machine 90, detection values by these sensors, as physical quantities collected during machining. The data acquisition unit 11 may acquire the rotation speed, the movement amount, the torque, the force, the acceleration, the temperature, and the like of each motor included in the machine 90. Note that the numerical control device 70 periodically collects the physical quantities at predetermined constant time intervals, and controls the machine 90 based on the collected physical quantities.

In addition, the data acquisition unit 11 acquires information referred to by the machining program generation unit 79 of the numerical control device 70 when generating the machining program, specifically, a workpiece material, a tool to be used, a circumferential speed, a feed speed, a radial cutting amount, an axial cutting amount, and the like. In addition, the data acquisition unit 11 acquires the machining program name generated by the machining program generation unit 79 of the numerical control device 70, the number of tool uses counted for each tool to be used by the numerical control device 70, the cumulative value of the tool use time, information on steps during execution of the machining program, and the like. In the following description, the information (information such as workpiece material, tool to be used, circumferential speed, feed speed, radial cutting amount, and axial cutting amount) acquired by the data acquisition unit 11 and referred to by the machining program generation unit 79 at the time of generating the machining program may be collectively referred to as machining conditions. The machining conditions include at least a workpiece material, a tool to be used, a circumferential speed, a feed speed, a radial cutting amount, and an axial cutting amount.

The feature calculation unit 12 calculates features of physical quantities acquired by the data acquisition unit 11. The feature calculation unit 12 calculates statistical features, for example, an average value, a maximum value, a minimum value, a median value, a standard deviation, a kurtosis, a skewness, and the like in a predetermined period based on a plurality of physical quantities collected in a predetermined period.

The storage unit 13 stores various data necessary for the operation of the machining diagnosis device 1.

The learning target identification unit 14 extracts a feature to be learned when the learning unit 15 learns a model for diagnosing the numerical control machine tool 7 from the feature calculated by the feature calculation unit 12 by using the machining condition information collected from the storage unit 72 and the machining program generation unit 79 of the numerical control device 70 as a search condition.

The learning unit 15 performs machine learning using learning data based on the features extracted by the learning target identification unit 14, and generates a learned model for diagnosing the numerical control machine tool 7. The learning unit 15 generates a learned model for each machining condition. That is, the learning unit 15 learns the relationship between the features of the physical quantities collected when machining is performed under the same machining conditions and the quality information of the workpiece machined by the numerical control machine tool 7.

The inference unit 16 performs machining diagnosis of the numerical control machine tool 7 based on the learned model for each machining condition generated by the learning unit 15 and the features calculated by the feature calculation unit 12. Specifically, the inference unit 16 determines whether the machining result by the machine 90 of the numerical control machine tool 7 is normal, and performs state determination of the wear amount, the wear tendency of the tool, and the like. In the determination as to whether the machining result is normal, the inference unit 16 performs, for example, determination as to whether a difference between a dimension of a machining section in which machining is finished and a target dimension is within a prescribed range and/or determination as to whether a difference between a shape of a workpiece after machining is finished and a target shape is within a prescribed range. In addition, the inference unit 16 estimates the dimension, curvature, straightness, and surface roughness of the workpiece after machining by the machine 90 is finished. Note that the inference unit 16 may execute all of the determination of the machining result, the state determination, and the estimation of the workpiece after machining is finished (estimation of dimension, curvature, straightness, and surface roughness) in the machining diagnosis, or may execute some of them in the machining diagnosis.

The notification unit 17 notifies the numerical control device 70 and the like of the inference result by the inference unit 16, that is, the diagnosis result of the numerical control machine tool 7.

Next, a learning phase in which the machining diagnosis device 1 generates a learned model for diagnosing the numerical control machine tool 7 and a utilization phase in which the machining diagnosis device 1 diagnoses the numerical control machine tool 7 using the learned model will be described.

### <Learning Phase>

FIG. 7 is a flowchart illustrating an example of an operation in which the machining diagnosis device 1 generates a learned model for diagnosing the numerical control machine tool 7.

First, the machining diagnosis device 1 acquires data necessary for generating a model (step S11). Specifically, the data acquisition unit 11 acquires, from the numerical control device 70, the physical quantities related to the machining operation collected during machining of the workpiece WA by the machine 90 and the machining conditions. The data acquisition unit 11 may acquire the above data when the numerical control machine tool 7 is machining the workpiece WA with the machine 90, or may acquire, after the machining is finished, the data collected when the numerical control machine tool 7 machines the workpiece WA with the machine 90 and stored in the numerical control device 70. The machining conditions acquired by the data acquisition unit 11 when the physical quantities are collected are the same machining conditions as the machining conditions used when the machining program generation unit 79 generates the machining program used when the numerical control device 70 controls the machine 90 to machine the workpiece WA. The workpiece material only needs to be acquired once during machining of the same workpiece WA.

Next, the machining diagnosis device 1 calculates features of the physical quantities acquired in step S11 (step S12). Specifically, the feature calculation unit 12 calculates features of physical quantities. Here, even in the machining performed under the same machining conditions, if the range to be machined (the length of the machining section) is different, the required time until the machining end is also different. Therefore, the feature calculation unit 12 calculates a statistical feature that is not affected by the required time until the end of machining, instead of a feature whose value changes according to the required time until the end of machining, such as an integral value of physical quantities. Specifically, the feature calculation unit 12 calculates, as statistical features, an average value, a maximum value, a minimum value, a median value, a standard deviation, a kurtosis, a skewness, and the like in a predetermined period. The feature calculation unit 12 calculates, for example, an average value, a maximum value, a minimum value, a median value, and the like of physical quantities collected from when machining under certain machining conditions is started to when the machining conditions are changed. The feature calculation unit 12 may divide a section in which machining is performed under the same machining conditions into sub-sections having a constant width, and calculate the features for each sub-section. The feature calculation unit 12 may calculate the features using the latest data acquired and the data acquired in the past every time the data acquisition unit 11 acquires the data in step S11, or may calculate the features at a predetermined timing using the data acquired in the past. The determined timing may be a timing at which the number of acquired data reaches a certain number, or may be a timing at which the machining diagnosis device 1 receives a predetermined operation by the user, for example, a timing at which an operation instructing generation of a learned model is received. In addition to the data described above, the data acquired in the past may include also data obtained in machining using different machining programs, that is, data obtained when machining having different target shapes is executed on different workpieces. In addition, every time a certain period of a predetermined length elapses, the feature calculation unit 12 may calculate the features using the data acquired by the data acquisition unit 11 in the certain period.

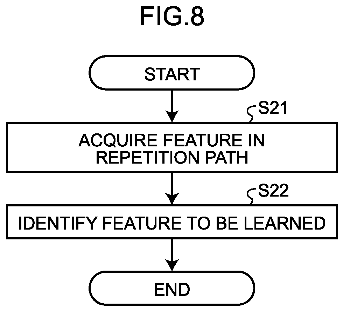

Next, the machining diagnosis device 1 creates learning data for each machining condition based on the features calculated in step S12 (step S13). Specifically, the learning target identification unit 14 aggregates the features calculated by the feature calculation unit 12 for each feature having the same machining conditions, and creates learning data for each machining condition. At this time, in a case where the same machining is repeatedly executed on the same section to obtain a target shape (target dimension), the learning target identification unit 14 identifies an approach section, which is a section in which machining conditions to be used are set, the tool comes into contact with the workpiece after the tool starts to approach the workpiece, and cutting with the cutting amount specified by the machining conditions starts, and excludes the features of the physical quantities collected in the approach section from the learning data. The approach section is provided to prevent the tool from violently colliding with the workpiece. In addition, the learning target identification unit 14 also excludes the features of the physical quantities collected in the target dimension matching section to be described later from the learning data. That is, as illustrated in FIG. 8, the learning target identification unit 14 acquires the features in the repetition path (step S21) and identifies the features to be learned (step S22). The features in the repetition path are the features of physical quantities collected when the same machining is repeatedly executed on the same section.

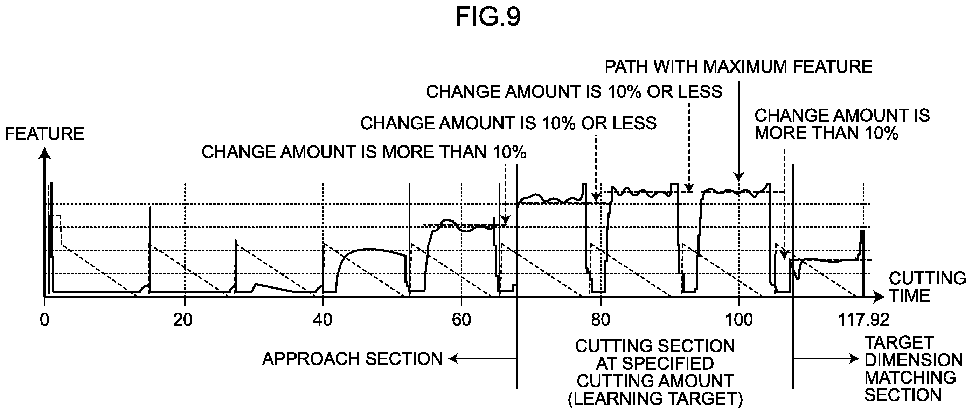

In step S21, the learning target identification unit 14 extracts the features in the repetition path from the features calculated by the feature calculation unit 12. In step S22, the learning target identification unit 14 sets, as the learning target, the remaining features excluding the features in the approach section and the features in the target dimension matching section from the features in the repetition path. FIG. 9 is a diagram for explaining an approach section and a target dimension matching section. In FIG. 9, the horizontal axis represents the cutting time (seconds), which is the elapsed time from the start of the cutting operation, and the vertical axis represents a feature. In the example illustrated in FIG. 9, after the start of cutting, the tool comes into contact with the workpiece around the time when the cutting time exceeds 40 seconds and the cutting is started, and the feature increases in every path. The magnitude of the feature is correlated with the cutting amount, and when the cutting amount becomes constant (specified cutting amount), the magnitude of the feature per path becomes substantially constant. However, when the surface to be machined of the workpiece is not uniform and has unevenness or the like, immediately after the tool comes into contact with the workpiece and actually starts cutting, the cutting amount may not be the specified cutting amount indicated by the machining conditions, and physical quantities and features may gradually increase. In consideration of such characteristics, the learning target identification unit 14 identifies the approach section based on the change amount of the feature for each path. For example, the learning target identification unit 14 sets, as the approach section, a section from the start of cutting and the start of the increase in the feature for each path to the time when the increase in the feature for each path becomes 10% or less. Note that the change amount of 10% used to identify the approach section is an example. The learning target identification unit 14 may determine a section until the change amount becomes another value, for example, 5% or less, as the approach section. In addition, in a case where the cutting amount required to obtain the target shape is not an integral multiple of the cutting amount per one cutting, the cutting amount in the last path of the repetition path (hereinafter referred to as a final path) becomes smaller than the cutting amount in the path up to immediately before, and the feature also decreases. Therefore, in a case where the feature in the final path decreases more greatly than the feature in the previous path, for example, in a case where the decrease amount (change amount) exceeds 10%, the learning target identification unit 14 determines the final path as the target dimension matching section and excludes the final path from the learning target. When the cutting amount required to obtain the target shape is an integral multiple of the cutting amount per one cutting, the final path does not become the target dimension matching section. In this manner, the learning target identification unit 14 identifies features of the physical quantities collected in the section that does not correspond to either the approach section or the target dimension matching section among the features in the repetition path, and sets the features as the features to be learned.

When identifying the features to be learned from the features in the repetition path, the learning target identification unit 14 may determine, as the learning target, a feature in a path in which the change amount of the feature between adjacent paths is within a determined range, for example, a feature in a path in which the change amount of the feature is within ±10%, centering on a path in which a feature such as the average value or the median value of physical quantities is maximum.

The learning target identification unit 14 may limit the features to be learned to the features of the physical quantities collected when the same machining is repeatedly executed on the same section to machine the target dimension. In this case, it is possible to learn the trend of the features in a case where the same machining is repeated in the machine learning for generating the learned model by the learning unit 15.

Returning to the description of FIG. 7, the machining diagnosis device 1 then generates a learned model for each machining condition (step S14). Specifically, the learning unit 15 performs machine learning using the learning data for each machining condition created by the learning target identification unit 14, and generates a plurality of learned models each corresponding to each machining condition. In learning, a model is generated from the features set as learning data for each machining condition, a principal component distance value, an anomaly degree of a neural network, and the like are calculated from learning data used for model generation or other learning target data, and a peak value in the learning target data is extracted as a normality/anomaly determination threshold. Alternatively, a quality prediction model may be generated by machine learning using the learning data for each machining condition with the quality value as an objective variable. That is, the learning unit 15 generates a learned model for inferring the machining result based on the features of the physical quantities collected during machining of the workpiece WA by the machine 90 of the numerical control machine tool 7. In machining after completion of learning, based on the features calculated after machining, the learned model determines normal machining if the principal component distance value or the degree of anomaly of the neural network does not exceed the predetermined normality/anomaly determination threshold. Alternatively, in a case where the learned model predicts the quality value, normality is determined if an error between the predicted value such as the dimension (hereinafter may be referred to as the actual dimension), curvature, straightness, or surface roughness and the dimension (hereinafter may be referred to as the target dimension) of the target shape is within a prescribed range. In the machine learning, the learning unit 15 uses a machine learning method such as principal component analysis, multiple regression analysis, a support vector machine, a decision tree, a gradient boosting decision tree, or a neural network.

The learning unit 15 may use an error between the actual dimension and the target dimension as a machining result and learn a relationship between the error and the features set as the learning data. In this case, the learning unit 15 generates a learned model for inferring the machining quality based on the features of the physical quantities collected during machining of the workpiece WA by the machine 90 of the numerical control machine tool 7, specifically, a learned model for inferring an error between the target dimension and the actual dimension.

The learning unit 15 may learn the relationship between the wear state of the tool used for machining and the features set as the learning data. In this case, the learning unit 15 generates a learned model for inferring the wear state of the tool based on the features of the physical quantities collected during the machining of the workpiece WA by the machine 90 of the numerical control machine tool 7. The wear state may be information indicating whether the blade of the tool is worn to an extent that replacement is necessary, may be an actual wear amount from an initial state (new state) of the blade of the tool, or may be a numerical value indicating a degree of wear, for example, what percent the blade is worn given that the new state is 0% and the state that replacement is necessary is 100%. When the machine 90 repeatedly executes the same machining on one section to perform cutting to the target dimension, the learning unit 15 may learn the relationship between the feature and the wear state of the tool in each of the repetition paths, or may learn the relationship between the trend of the feature and the wear state of the tool in each of the repetition paths. A change amount in feature may be obtained before and after the repetition path, and the relationship between the trend of the change amount and the wear state of the tool may be learned. When the tool wears, the features of the physical quantities collected during machining change. That is, there is a correlation between the wear state of the tool and the feature or between the wear state of the tool and the change amount in the feature. Therefore, by learning the trend of the feature for each repetition path, it is possible to generate a learned model capable of inferring the wear state of the tool with high accuracy.

As described above, in the learning of the model for diagnosing the numerical control machine tool 7, the machining diagnosis device 1 acquires, from the numerical control device 70, the physical quantities collected during machining and the machining conditions at the time when the physical quantities are collected, creates the learning data for each machining condition based on the features of the physical quantities and the machining conditions, and performs learning using the learning data for each machining condition to generate the learned model for each machining condition. In addition, when generating the learning data for each machining condition, the machining diagnosis device 1 identifies features calculated on the basis of the physical quantities actually collected during machining of the workpiece under the acquired machining conditions among the features of the physical quantities collected during machining, and creates the learning data.

The machining diagnosis device 1 may generate a plurality of types of learned models for each machining condition. For example, the machining diagnosis device 1 may create a learned model for inferring whether machining performed by the machine 90 is normal or abnormal and a learned model for inferring the wear state of the tool for each machining condition. For example, the machining diagnosis device 1 may generate a learned model for inferring an error between a target dimension and an actual dimension and a learned model for inferring a wear state of a tool for each machining condition.

### <Utilization Phase>

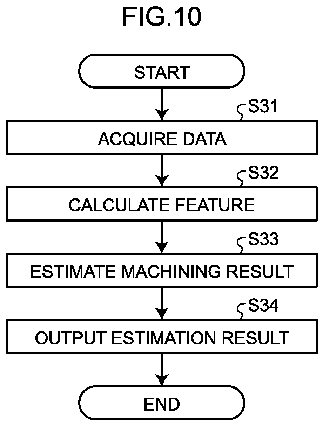

FIG. 10 is a flowchart illustrating an example of an operation in which the machining diagnosis device 1 according to the embodiment diagnoses a machining result by the numerical control machine tool 7 using the learned model.

First, the machining diagnosis device 1 acquires data necessary for diagnosis processing of the numerical control machine tool 7 (step S31). Specifically, the data acquisition unit 11 periodically acquires, from the numerical control device 70, the physical quantities related to the machining operation collected from the machine 90 that is machining the workpiece WA and the machining conditions. The data acquired by the data acquisition unit 11 in step S31 is the same type of data as the data collected in step S11 of the learning phase described above.

Next, the machining diagnosis device 1 calculates features of physical quantities included in the data acquired in step S31 (step S32). Specifically, the feature calculation unit 12 calculates features similar to the features calculated in step S12 of the learning phase described above at a predetermined timing. For example, the machining diagnosis device 1 calculates the features in a cycle that is an integral multiple of the cycle in which the data acquisition unit 11 acquires data in step S31. When the machining conditions included in the data acquired by the data acquisition unit 11 in step S31 change, that is, when the machining conditions included in the latest data acquired by the data acquisition unit 11 are different from the machining conditions included in the data acquired before the change, the machining diagnosis device 1 may calculate the features of the physical quantities collected during machining under the machining conditions before the change thereof. The feature calculation unit 12 outputs, to the inference unit 16, the calculated features and the machining conditions at the time when the physical quantities used to calculate the features are collected.

Next, the machining diagnosis device 1 estimates the machining result by the machine 90 of the numerical control machine tool 7 based on the features calculated in step S32 and the learned model generated in the learning phase described above (step S33). Specifically, the inference unit 16, which is an estimation unit, executes machining diagnosis for estimating a machining result on the basis of the features input from the feature calculation unit 12 and the learned model corresponding to the machining conditions input from the feature calculation unit 12. The inference unit 16 inputs the features to the learned model and acquires the estimated machining result output from the learned model accordingly.

Next, the machining diagnosis device 1 outputs the estimation result in step S33 (step S34). Specifically, the notification unit 17 outputs the machining result estimated by the inference unit 16 in step S33 to the numerical control device 70.

When the machining diagnosis device 1 estimates the wear state of the tool in step S33 and estimates that the wear amount of the tool requiring replacement has been reached, the machining diagnosis device 1 may notify the numerical control device 70 of information on the tool requiring replacement in step S34 to instruct replacement of the tool.

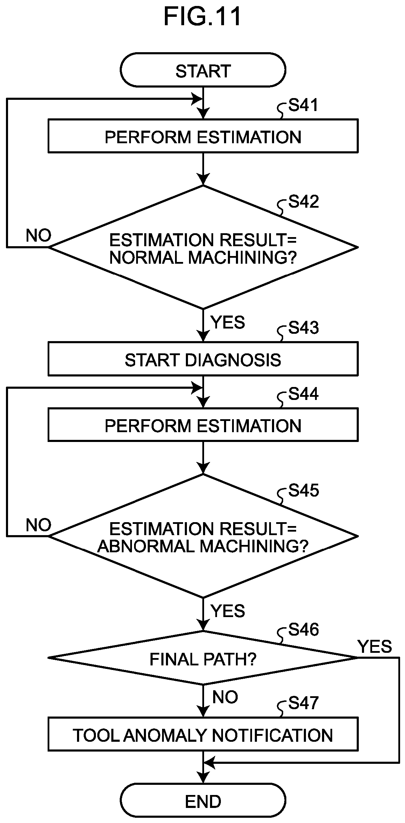

As described in the learning phase, even in machining repeatedly executed under the same machining conditions, machining with the cutting amount indicated by the machining conditions is not performed in the approach section. That is, the physical quantities collected in the section from the machining start to the end of the approach section are greatly different from the physical quantities collected in other sections in which machining is performed under the same machining conditions. Therefore, in the approach section, correct diagnosis cannot be performed using the learned model, and when diagnosis is performed, the diagnosis result becomes abnormal machining. Therefore, after starting the repetitive machining, the machining diagnosis device 1 waits until the approach section ends and the diagnosis result becomes normal machining for the first time, and starts the actual diagnosis. Specifically, the machining diagnosis device 1 treats the diagnosis result from the start of repetitive machining until the diagnosis result becomes normal machining for the first time as invalid. FIG. 11 is a flowchart illustrating an example of diagnosis operation by the machining diagnosis device 1 according to the embodiment.

The machining diagnosis device 1 first estimates a machining result by executing processing similar to steps S31 to S33 illustrated in FIG. 10 (step S41), and confirms whether the estimation result is normal machining (step S42). When the estimation result is abnormal machining (step S42: No), the machining diagnosis device 1 determines that the estimation result is invalid, returns to step S41, and estimates the machining result again.

When the estimation result is normal machining (step S42: Yes), the machining diagnosis device 1 starts diagnosis (step S43) and estimates the machining result (step S44). In step S44, processing similar to steps S31 to S34 illustrated in FIG. 10 is executed, and estimation of a machining result and output of the estimated machining result are performed.

After estimating the machining result in step S44, the machining diagnosis device 1 confirms whether the estimation result is abnormal machining (step S45). When the estimation result is normal machining (step S45: No), the machining diagnosis device 1 returns to step S44 and performs again estimation of a machining result and output of the estimated machining result. On the other hand, when the estimation result is abnormal machining (step S45: Yes), the machining diagnosis device 1 confirms whether the path is the final path, that is, whether the estimation result is abnormal machining in the final path (step S46). When the estimation result indicates abnormal machining in the final path (step S46: Yes), this is because machining has been performed with a cutting amount different from the cutting amounts in the other paths, and the machining diagnosis device 1 ends the operation accordingly. On the other hand, when the estimation result indicates abnormal machining except in the final path (step S46: No), there is a possibility that the change amount of the feature shows a tendency different from that in normal machining due to breakage or loss of the tool used, and the estimation result indicates abnormal machining. Therefore, the machining diagnosis device 1 notifies the numerical control device 70 of the numerical control machine tool 7 that the tool is abnormal (step S47), and ends the diagnosis operation.

As described above, the machining diagnosis device 1 acquires the physical quantities related to the machining operation collected from the machine 90 during machining of the workpiece WA and the machining conditions at the time when the physical quantities are collected from the numerical control device 70, and performs machining diagnosis of the numerical control machine tool 7, specifically, estimation of the machining result by the machine 90 included in the numerical control machine tool 7, using the acquired features of the physical quantities and the learned model corresponding to the acquired machining conditions.

In the present embodiment, the numerical control device 70 includes the machining program generation unit 79, and the machining program generation unit 79 generates the machining program. However, the present disclosure is not limited to such a configuration. A computer aided manufacturing (CAM) system may be configured to create a machining program based on drawing data of the target shape of the workpiece WA created by a computer aided design (CAD) system.

When the CAM system creates a machining program, an operator sets a cut amount in the CAM system with reference to past experience of similar machining (cutting conditions of a past cut with the same tool) from the drawing of the target shape created by the CAD system, and registers coordinate information indicating passing points of the tool in the CAM system. When necessary setting and registration are performed by the operator, and further, creation of the machining program is instructed by the operator, the CAM system automatically generates the machining program on the basis of the registered coordinate information and the set machining conditions (workpiece material, tool to be used, circumferential speed, feed speed, radial cutting amount, and axial cutting amount). The CAM system holds information (hereinafter referred to as line-by-line machining condition information) indicating under which machining conditions machining is performed for each line of the machining program. Therefore, the machining diagnosis device 1 acquires the line-by-line machining condition information from the CAM system in advance together with the machining program name and holds them in the storage unit 13. Once machining is performed by the numerical control machine tool 7, the machining diagnosis device 1 acquires, from the numerical control device 70, the name of the machining program being executed, the physical quantities collected by the numerical control device 70, and information on steps during execution of the machining program (hereinafter referred to as in-execution step information), and compares the acquired in-execution step information with the line-by-line machining condition information held in the storage unit 13 to identify the machining conditions at the time when the acquired physical quantities are obtained. As a result, the machining diagnosis device 1 can create learning data for each machining condition, perform machine learning, and generate a learned model for each machining condition. In addition, the machining diagnosis device 1 can diagnose the machining result by the numerical control machine tool 7 using the learned model for each machining condition.

As described above, the machining diagnosis device 1 according to the present embodiment acquires the physical quantities collected when the machine 90 is machining the workpiece WA and the machining conditions at the time when the physical quantities are collected from the numerical control machine tool 7 including the numerical control device 70 and the machine 90, performs machine learning using the acquired physical quantities and machining conditions, and generates a learned model for diagnosing the numerical control machine tool 7 for each machining condition. After generating the learned model, the machining diagnosis device 1 acquires the physical quantities collected when the machine 90 is machining the workpiece WA and the machining conditions at the time when the physical quantities are collected, and performs machining diagnosis of the numerical control machine tool 7 based on the learned model corresponding to the acquired machining conditions and the acquired features of the physical quantities. Since the machining diagnosis device 1 according to the present embodiment performs machining diagnosis in consideration of machining conditions (workpiece material, tool to be used, circumferential speed, feed speed, radial cutting amount, and axial cutting amount) at the time when physical quantities are collected, the machining diagnosis of the numerical control machine tool 7 can be performed even when the machine 90 of the numerical control machine tool 7 to be diagnosed performs machining for high-mix low-volume production.

The machining diagnosis device 1 may perform diagnosis of a different content for each machining section in the machining diagnosis operation of the numerical control machine tool 7. For example, the machining diagnosis device 1 may diagnose the wear state of the tool and the machining result when the machine 90 repeatedly executes the same machining on one machining section to perform cutting to the target dimension, and may diagnose only the machining result when the machine 90 does not repeat the same machining on one machining section (performs machining only once). In addition, the machining diagnosis device 1 may diagnose the wear state of the tool and/or the machining result only when the machine 90 repeatedly executes the same machining on one machining section to perform cutting to the target dimension.

The configurations described in the above-mentioned embodiment indicate examples. The configurations can be combined with another well-known technique, and some of the configurations can be omitted or changed in a range not departing from the gist.

For example, in the embodiment, the configuration in which the learning unit 15 and the inference unit 16 are provided inside the machining diagnosis device 1 has been described, but the learning unit 15 and/or the inference unit 16 may be provided outside the machining diagnosis device 1. For example, the learning unit 15 may be provided in an external learning device, the inference unit 16 may be provided in an external inference device, and these learning device and inference device may be connected to the machining diagnosis device 1 via a communication network or the like. The machining diagnosis device 1 may be included in the numerical control machine tool 7.

### Reference Signs List

1 machining diagnosis device; 7 numerical control machine tool; 11 data acquisition unit; 12 feature calculation unit; 13, 72 storage unit; 14 learning target identification unit; 15 learning unit; 16 inference unit; 17 notification unit; 51, 71 processor; 52 main storage unit; 53 auxiliary storage unit; 54 input unit; 55 output unit; 56 communication unit; 70 numerical control device; 73 external connection I/F; 74 operation panel I/F; 75 spindle control I/F; 76 servo control I/F; 77 digital input unit; 78 digital output unit; 79 machining program generation unit; 80 external sensor; 82 NC operation panel; 85 spindle amplifier; 86 servo amplifier; 90 machine; 91 spindle; 92, 201 tool; 93 spindle motor; 94 table; 95 movement mechanism; 96x, 96y, 96z servomotor; 100 machine tool system; 202 blade; 203 workpiece.

## Claims

1. A machining diagnosis device comprising:
a data acquisition unit to acquire a physical quantity related to an operation state of a machine that machines a workpiece, and a machining condition at a time when the physical quantity is obtained;
a feature calculation unit to calculate, for each machining condition based on the physical quantity and the machining condition, a statistical feature of a physical quantity obtained during machining under the same machining condition; and
an estimation unit to perform machining diagnosis based on the statistical feature for each machining condition.

2. The machining diagnosis device according to claim 1, wherein
the machining condition is a material of the workpiece, a tool to be used in the machining, and a circumferential speed, a feed speed, a radial cutting amount, and an axial cutting amount at a time when the machining is performed.

3. The machining diagnosis device according to claim 1 or 2, wherein
the machine is provided in a numerical control machine tool including a machining program generation unit that automatically generates a machining program based on a material of the workpiece and a tool to be used in machining that have been input, and a database of machining parameters, and performs the machining using the machining program generated by the machining program generation unit, and
the data acquisition unit acquires the machining condition from the machining program generation unit.

4. The machining diagnosis device according to claim 1 or 2, wherein
the machine performs the machining using a machining program generated by a CAM system based on a target shape of the workpiece, and
the data acquisition unit acquires the machining condition from the CAM system.

5. The machining diagnosis device according to any one of claims 1 to 4, wherein
the estimation unit estimates whether machining performed by the machine is normal or abnormal based on the statistical feature.

6. The machining diagnosis device according to any one of claims 1 to 5, wherein
the estimation unit estimates a quality of machining performed by the machine based on the statistical feature.

7. The machining diagnosis device according to any one of claims 1 to 6, wherein
a machining diagnosis result by the estimation unit includes a wear state of a tool used by the machine in machining in which the physical quantity is obtained, and
the machining diagnosis device includes a notification unit to issue an instruction to replace the tool when the wear state indicates that a wear amount requiring replacement of the tool has been reached.

8. The machining diagnosis device according to any one of claims 1 to 7, wherein
the estimation unit performs the machining diagnosis based on a statistical feature of a physical quantity obtained when the machine repeatedly executes machining under the same machining condition on the same section.

9. The machining diagnosis device according to claim 8, wherein
the estimation unit performs the machining diagnosis using a remaining statistical feature after excluding a statistical feature of a physical quantity obtained in a state in which a cutting amount of a tool with respect to a workpiece is not a specified cutting amount indicated by the machining condition.

10. The machining diagnosis device according to claim 9, wherein
the estimation unit repeatedly performs the machining diagnosis based on a feature of a physical quantity obtained by each repetitive machining under the same machining condition on the same section by the machine, invalidates a result of the machining diagnosis performed before a cutting amount of a tool with respect to the workpiece becomes a specified cutting amount indicated by the machining condition, and sets a result of the machining diagnosis performed after the cutting amount of the tool with respect to the workpiece becomes the specified cutting amount indicated by the machining condition as a valid machining diagnosis result.

11. The machining diagnosis device according to claim 9, wherein
the estimation unit estimates that the tool used in the machining has been broken or lost when a result of the machining diagnosis based on the feature of the physical quantity obtained in the machining of a path other than the final path among the repetitive machining under the same machining condition after the cutting amount of the tool with respect to the workpiece has reached the specified cutting amount indicated by the machining condition is abnormal machining.

12. The machining diagnosis device according to any one of claims 1 to 11, wherein
the feature calculation unit calculates the statistical feature based on the physical quantity obtained in machining using different machining programs.

13. The machining diagnosis device according to any one of claims 1 to 12, comprising
a learning unit to perform machine learning using learning data created based on the statistical feature for each machining condition, and generate, for each machining condition, a learned model for performing the machining diagnosis based on the statistical feature, wherein
once the data acquisition unit acquires the physical quantity and the machining condition, the estimation unit performs the machining diagnosis using the feature calculated by the feature calculation unit based on the physical quantity acquired and the learned model corresponding to the machining condition acquired.

14. The machining diagnosis device according to claim 13, comprising
a learning target identification unit to determine, as a statistical feature for use in the machine learning, a remaining statistical feature after excluding a statistical feature of a physical quantity obtained in a state in which a cutting amount of a tool with respect to a workpiece is not a specified cutting amount indicated by the machining condition among statistical features of physical quantities obtained when the machine repeatedly executes machining under the same machining condition on the same section.

15. A learning device comprising:
a data acquisition unit to acquire a physical quantity related to an operation state of a machine that machines a workpiece, and a machining condition at a time when the physical quantity is obtained;
a feature calculation unit to calculate, for each machining condition based on the physical quantity and the machining condition, a statistical feature of a physical quantity obtained during machining under the same machining condition; and
a learning unit to perform machine learning using learning data created based on the statistical feature for each machining condition, and generate, for each machining condition, a learned model for performing machining diagnosis based on the statistical feature.

16. An inference device comprising:
a data acquisition unit to acquire a physical quantity related to an operation state of a machine that machines a workpiece, and a machining condition at a time when the physical quantity is obtained;
a feature calculation unit to calculate, for each machining condition based on the physical quantity and the machining condition, a statistical feature of a physical quantity obtained during machining under the same machining condition; and
an estimation unit to perform machining diagnosis based on: a learned model for performing machining diagnosis based on the statistical feature, the learned model being generated by a learning device that performs machine learning using learning data created based on the statistical feature for each machining condition; and the statistical feature for each machining condition calculated by the feature calculation unit.

17. A machining diagnosis method with which a machining diagnosis device estimates a machining result of a workpiece by a machine, the machining diagnosis method comprising:
a data acquisition step of acquiring a physical quantity related to an operation state of the machine, and a machining condition at a time when the physical quantity is obtained;
a feature calculation step of calculating, for each machining condition based on the physical quantity and the machining condition, a statistical feature of a physical quantity obtained during machining under the same machining condition; and
a diagnosis step of performing machining diagnosis based on the statistical feature for each machining condition.

18. A machining diagnosis program that causes a computer to execute:
a data acquisition step of acquiring a physical quantity related to an operation state of a machine that machines a workpiece, and a machining condition at a time when the physical quantity is obtained;
a feature calculation step of calculating, for each machining condition based on the physical quantity and the machining condition, a statistical feature of a physical quantity obtained during machining under the same machining condition; and
a diagnosis step of performing machining diagnosis based on the statistical feature for each machining condition.

19. A machine tool system comprising:
a machine to machine a workpiece;
a numerical control device to control the machine according to a machining program; and
a machining diagnosis device to diagnose machining by the machine, wherein
the machining diagnosis device acquires a physical quantity related to an operation state of the machine and a machining condition at a time when the physical quantity is obtained, calculates, for each machining condition based on the physical quantity and the machining condition, a statistical feature of the physical quantity obtained during machining under the same machining condition, and diagnoses the machining based on the statistical feature for each machining condition.

20. The machine tool system according to claim 19, wherein
the numerical control device determines the machining condition and generates the machining program based on a material of the workpiece and a tool to be used in machining that have been input, and a database of machining parameters.
